# EUROPÄISCHE PATENTSCHRIFT

(11) **EP 2 855 073 B1**
(45) Veröffentlichungstag und Bekanntmachung des Hinweises auf die Patenterteilung: **02.11.2016**
(21) Anmeldenummer: 13731662.6
(22) Anmeldetag: 29.05.2013
(51) Int. Cl.: B23K 20/12

(54) **VERFAHREN UND VORRICHTUNG ZUR VERBESSERUNG DER QUALITÄT DER SCHWEISSNAHT BEIM RÜHRREIBSCHWEISSEN**
METHOD AND DEVICE FOR IMPROVING THE QUALITY OF THE WELD SEAM IN FRICTION STIR WELDING
PROCÉDÉ ET DISPOSITIF POUR AMÉLIORER LA QUALITÉ DU CORDON DE SOUDURE LORS DU SOUDAGE PAR FRICTION-MALAXAGE

(30) Priorität: 31.05.2012 DE 102012010836
(43) Veröffentlichungstag der Anmeldung: 08.04.2015
(73) Patentinhaber: Grenzebach Maschinenbau GmbH, 86663 Asbach-Baeumenheim (DE)
(72) Erfinder: FÖRG, Johann, 86687 Kaisheim-Altisheim (DE); DEMHARTER, Martin, 86159 Augsburg (DE); REITENAUER, Andreas, 86637 Wertingen (DE)
(74) Vertreter: Kindermann, Peter
(86) Internationale Anmeldenummer: PCT/DE2013/000293
(87) Internationale Veröffentlichungsnummer: WO 2013/178215

(56) Entgegenhaltungen:
- DE-A1-102005 060 178
- JP-A- 2009 538 230
- JP-A- 2011 079 031
- JP-B- 4 838 385
- US-A1- 2007 152 015

## Beschreibung

Die Erfindung betrifft eine Verbesserung der Qualität von Rührreibwerkzeugen beim Rührreibschweißen.
Anfang der neunziger Jahre des vorigen Jahrhunderts wurde das Rührreibschweißen, oder auch Reibrührschweißen genannt, entwickelt. Das Rührreibschweißen wird unter anderem für das Schweißen von Aluminiumlegierungen mittlerweile in vielen relevanten Industriebereichen erfolgreich eingesetzt. Die Anwendungen reichen hierbei von Einzelstücken und Kleinserien bis hin zu größeren Serien. Zum wirtschaftlichen Erfolg tragen neben der hervorragenden Güte der Schweißnaht auch die hohe Reproduzierbarkeit und die geringen Vorbereitungsarbeiten und Aufwendungen zur Nachbearbeitung bei. Dieses Verfahren lässt sich sehr gut automatisieren und erlaubt eine Qualitätsüberwachung auf der Basis einer Maschinenüberwachung.
Beim Rührreibschweißen wird im Fügebereich der zu verbindenden Materialien mittels der Reibung zwischen einem rotierenden, gleichzeitig translatorisch bewegten und mit Druck aufgebrachten, Werkzeug Reibungswärme erzeugt. Das Werkzeug wird entlang des Fügebereichs bewegt und verrührt das plastifizierte Material im Inneren der Naht der zu verbindenden aneinander stoßenden Materialien. Der aufgebrachte Druck presst das plastifzierte Material zusammen. Am Ende dieser Naht wird das Werkzeug aus dem Verbindungsbereich herausgezogen und die Schweißnaht ist unmittelbar belastbar.

Aus der DE 10 2004 030 381 B3 ist ein Verfahren zur Online - Qualitätsprüfung beim Reibrührschweißen bekannt, dem die Aufgabe zugrunde liegt, zuverlässig und einfach zu sein.
Zur Lösung dieser Aufgabe wird beansprucht, dass ein Reibrührwerkzeug unter drehender Bewegung und Druckbeaufschlagung in das Material zu verschweißender Werkstücke eingeführt und entlang einer Verbindungsstelle der zu verschweißenden Werkstücke geführt wird, wobei die Druckbeaufschlagung und / oder die während des Reibrührschweißprozesses auftretenden Schwingungen des Reibrührwerkzeugs, der zu verschweißenden Werkstücke oder anderer durch den Schweißprozess angeregter Elemente in Abhängigkeit der Zeit gemessen werden und anschließend mittels Fourier - Transformation in Frequenz - Amplitudenspektren umgewandelt werden, und dass die ermittelten Frequenz - Amplitudenspektren zur Qualitätsprüfung der erzeugten Schweißverbindung mit Referenzwerten verglichen werden.

Ferner ist in der DE 603 10 020 T2 ein Verfahren zum Verbinden von Strukturkomponenten mittels Reibschweißen mit einem Verbindungsstift beschrieben, bei dem ein Verfahren zur Fertigung einer Strukturanordnung beansprucht wird, die folgende Merkmale beinhaltet. Positionieren eines ersten Strukturelements, zumindest teilweise benachbart zu einem zweiten Strukturelement, um zwischen diesen eine Zwischenfläche zu definieren. Einführen eines rotierenden Stiftes in das erste und zweite Strukturelement an der Zwischenfläche, um dabei eine Reibstiftschweißverbindung zu bilden, die das erste Strukturelement mit dem zweiten Strukturelement verbindet, und Ausbilden einer lang gestreckten Schweißverbindung zwischen dem ersten und zweiten Strukturelement entlang der Zwischenfläche, wobei die lang gestreckte Schweißverbindung den Stift zumindest teilweise verbraucht.

Die Druckschrift JP 4 838385 B2 betrifft ein 2-seitiges Rührreibschweißverfahren und insbesondere ein Computerprogramm mit Programmcode zur Durchführung der zugehörigen Verfahrensschritte.

Aus der den Oberbegriff des Patentanspruchs 1 und 6 bildenden Druckschrift DE 10 2005 060 178 A1 ist eine Vorrichtung und ein Verfahren zur Verbesserung der Qualität der Schweißnaht beim Rührreibschweißen bekannt, wobei das Rührreib-Werkzeug eine formangepasste Schulter aufweist.

Die Druckschrift JP 2011 079031 A offenbart eine Vorrichtung und ein Verfahren zum-Rührreibschweißen, wobei ein rotierendes Werkzeug zum Schweißen innerer Ecken vorgesehen ist.

Weiterhin sind in der Druckschrift US 2007 /152015 A1 ein Verfahren und eine Vorrichtung zum Rührreibschweißen mit rückziehbarer Pin-Drehung beschrieben.

Die Druckschrift JP 2009 538230 A betrifft ein Werkzeug zum Rührreibschweißen aus Pulver-Metall.

Weiter ist aus der WO 2007/006669 A1 ein Rührreibschweißwerkzeug sowie ein Verfahren und eine Anordnung zur Echtzeit - Kontrolle eines Rührreibschweißprozesses durch Erfassung der Beschleunigungskräfte und / oder Schwingungen an dem Werkzeugkörper bekannt. Dieser Erfindung liegt die Aufgabe zugrunde, ein kompaktes, universell einsetzbares Rührreibschweißwerkzeug sowie ein Verfahren und eine Anordnung zur Echtzeit - Kontrolle eines Rührreibschweißprozesses bereit zu stellen, mit denen es gelingt, den Fügeprozess einfach und kostengünstig zu optimieren, sodass in seinem Ergebnis eine den Qualitätsanforderungen entsprechende Fügenaht ohne notwendige Nachbearbeitung entsteht und die Belastung der Rührreibschweißanlage minimiert wird. Gelöst wird diese Aufgabe mit einem Rührreibschweißwerkzeug bestehend aus einem Werkzeuggrundkörper und einem Werkzeugrührbolzen mit einer Schulter und einem Stift, wobei imWerkzeuggrundkörper mindestens ein Sensor zur Erfassung der auf denWerkzeuggrundkörper wirkenden Beschleunigungskräfte integriert ist.
Die Standzeit des Werkzeugrührwerkzeugs wird im bekannten Stand der Technik nicht berücksichtigt.

Der vorliegenden Erfindung liegt deshalb die Aufgabe zugrunde, eine Vorrichtung und ein Verfahren zur Verbesserung der Qualität der Schweißnaht beim Rührreibschweißen zu schaffen, wobei die Standzeit des Werkzeugrührwerkzeugs von ca. 2 Stunden auf 15 Stunden erhöht ist und die Qualität der Fügenaht derart verbessert ist, dass keinerlei Nachbearbeitung erforderlich ist.

Erfindungsgemäß wird diese Aufgabe hinsichtlich der Vorrichtung durch die Merkmale des Patentanspruchs 1 und hinsichtlich des Verfahrens durch die Maßnahmen des Patentanspruchs 6 gelöst.

In den Unteransprüchen sind weitere vorteilhafte Ausgestaltungen der Erfindung gekennzeichnet.

Die erfindungsgemäße Vorrichtung wird im Folgenden näher beschrieben.

Es zeigen im Einzelnen:
Fig. 1 : eine Seitenansicht der erfindungsgemäßen Vorrichtung
Fig. 2: einen Querschnitt aus dem Bereich des Schmelzprozesses
Fig.3: eine perspektivische Ansicht des Spindellagers 4
Fig.4: eine Darstellung zur Wirkung der Transportschnecke 6
Fig.5: Detail - Ansichten des Arbeitswerkzeugs 7
Fig.6: Darstellung eines komplexen Schweißvorgangs

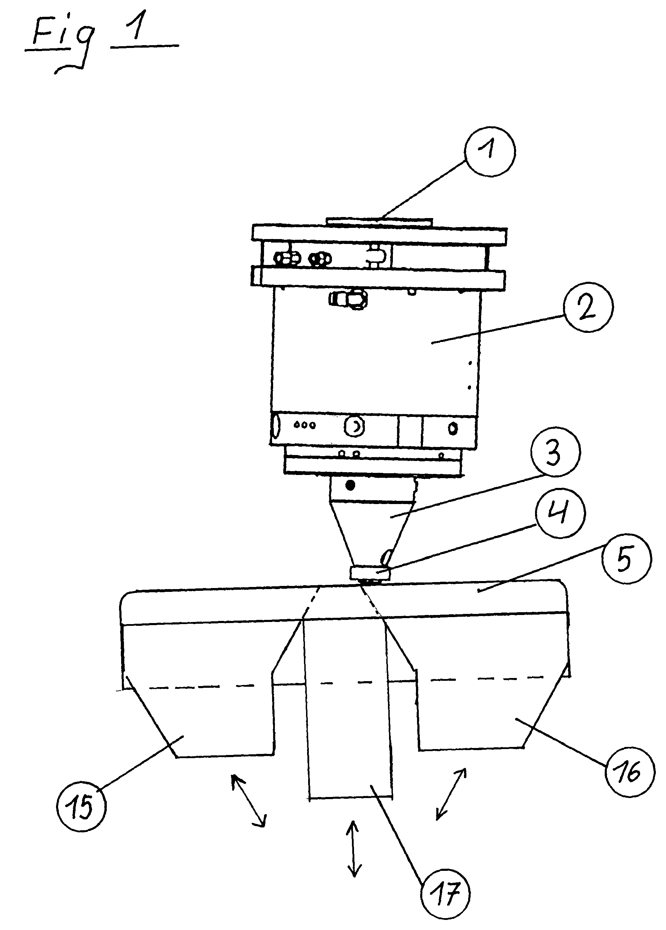

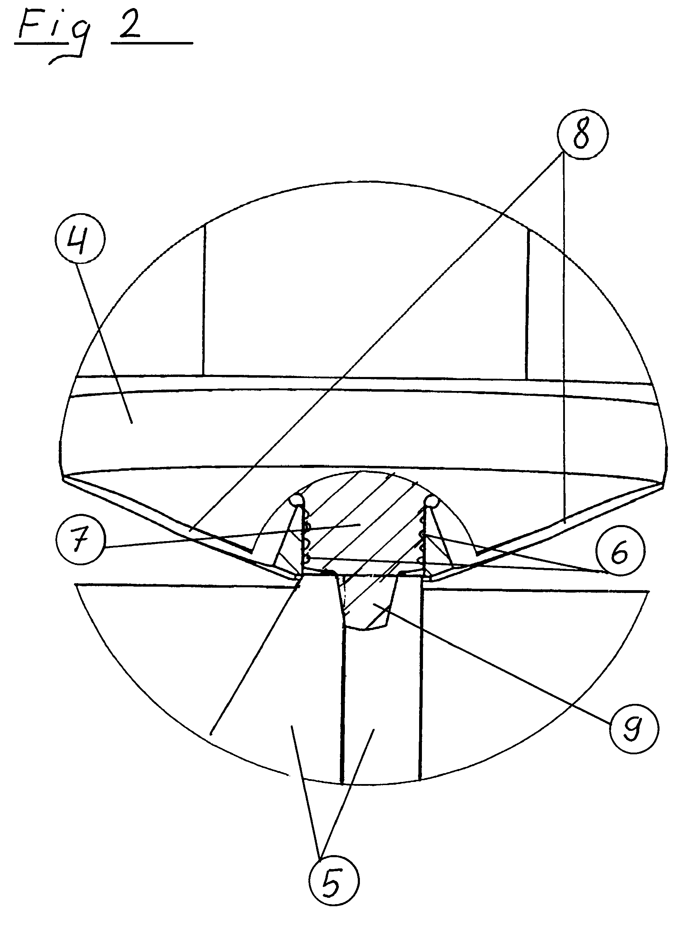

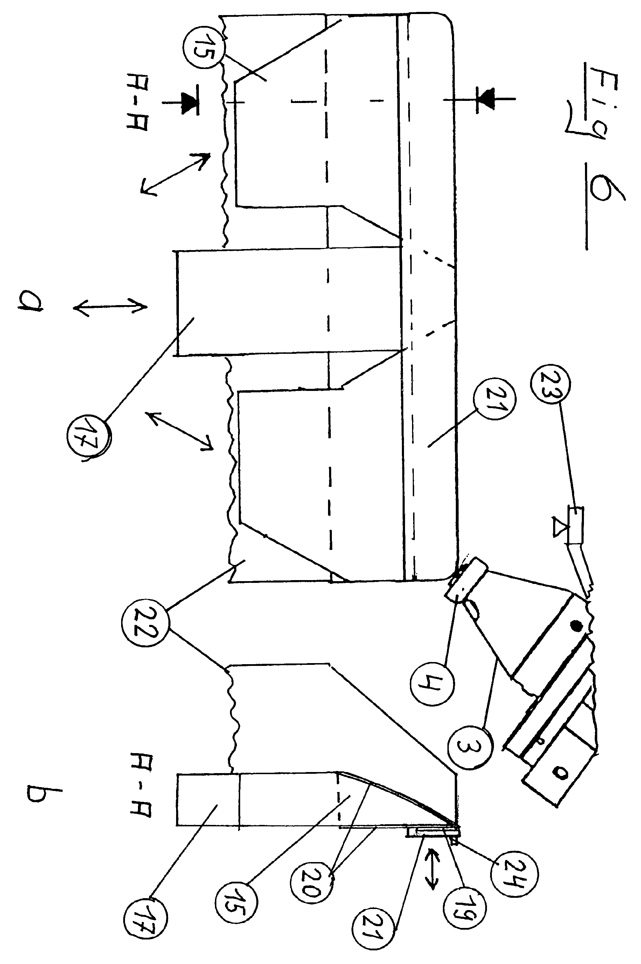

Die Fig.1 zeigt eine Seitenansicht der erfindungsgemäßen Vorrichtung.
Eine Aufnahmeplatte 1 verbindet einen Antriebskopf 2 mit einer Werkzeugmaschine, zum Beispiel einem Roboterarm, die den gesamten Bewegungsablauf des Schweißvorgangs steuert. Der Antriebskopf 2 weist einen Haltekegel 3 auf, der der Halterung eines Spindellagers 4 dient.
Das Schweißgut 5 besteht im dargestellten Fall aus einem schalenförmigen Formkörper auf den ein Blechformteil aufgeschweißt wird, das dieselbe Außenkontur aufweist wie der schalenförmige Formkörper. Zu Einzelheiten wird auf die Fig.2 und die Fig.6 verwiesen. Zur Halterung des Schweißguts dienen in diesem Fall die Fixierbacken 15, 16 und 17. Die aufgezeigten Doppelpfeile zeigen die Bewegungsrichtungen dieser Fixierbacken beim Einspannen und, nach erfolgtem Schweißvorgang, beim Lösen des Schweißguts 5.

Die Fig.2 zeigt einen Querschnitt aus dem Bereich des Schmelzprozesses.
Im oberen Teil dieser Figur ist das Unterteil des Spindelllagers 4 dargestellt.
Die beiden Hinweislinien die das Schweißgut 5 betreffen, zeigen auf der rechten Seite auf das, bei der Beschreibung der Fig.1 erwähnte, Blechformteil. Dieses Blechformteil ist hier in vergrößerter Darstellung im Querschnitt als senkrecht orientierte Schnittfläche zu sehen. Links neben der Begrenzungslinie des Blechformteils ist im Querschnitt der schalenförmige Formkörper im Querschnitt als schräg zulaufende Schnittfläche zu erkennen.
Im Zentrum der Darstellung der Fig.2 ist in schraffierter Form der untere Teil des Arbeitswerkzeugs 7 und der Reibschweißspitze 9 gezeigt. Hier wird deutlich, dass die Reibschweißspitze 9 mittels der durch ihre Drehung verursachten Erhitzung des Schweißguts 5 zum größten Teil in den Bereich des Blechformteils eingetaucht ist und lediglich mit ihrer Seitenkante den Formkörper tangential durch Reibung erwärmt.
Im Randbereich des Arbeitswerkzeugs 7 sind auf beiden Seiten die Vertiefungen der im Querschnitt auf diese Weise erkennbaren Transportschnecke 6 zusehen. Mittels dieser Transportschnecke 6 wird erreicht, dass der beim Schweißvorgang entstehende Material - Auftrag, der normalerweise den Bereich um die Transportschnecke 6 zusetzt und nach etwa 2 Stunden Betriebszeit den kompletten Austausch eines Arbeitswerkzeugs erfordert, nach oben befördert wird und über die Öffnungen 8 austritt. Auf diese Weise wird erfindungsgemäß erreicht, dass die Standzeit des Arbeitswerkzeugs sich auf signifikante Weise erhöht.

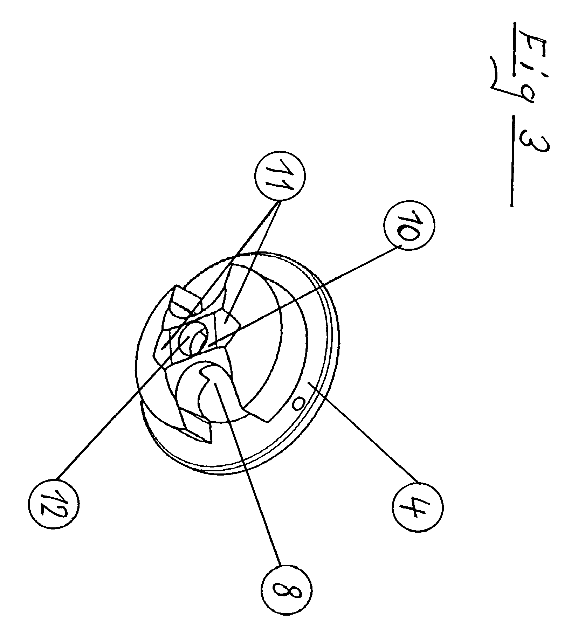

Die Fig.3 zeigt eine perspektivische Ansicht des Spindellagers 4.
Neben einer Öffnung 8 und dem Transportschneckenlager 12 ist hier vor allem die Gleitfläche 10 zu erkennen mittels der die Eintauchtiefe der Reibschweißspitze 9 begrenzt wird. Als Besonderheit sind im Anschluss an die Gleitfläche 10 beiderseits noch jeweils eine geneigte, in sich gewölbte Gleitfläche 11 angefügt. Diese dient der Erleichterung des Schweißvorgangs generell und beim Verschweißen von kurvenförmigen Formstücken.

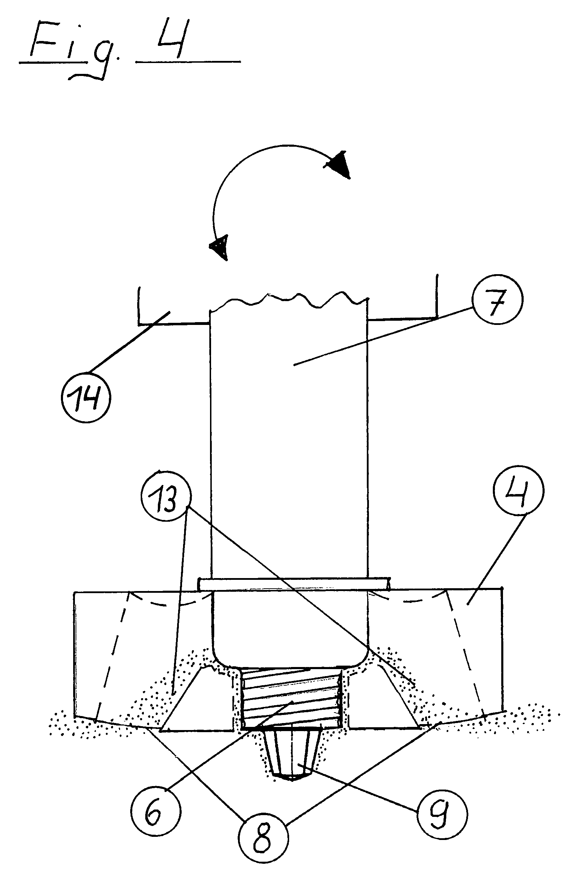

Die Fig.4 zeigt eine Darstellung zur Wirkung der Transportschnecke 6. In zentraler Lage ist hier einerseits das Arbeitswerkzeug 7 und andererseits in dessen Wirkbereich die Reibschweißspitze 9 im Querschnitt zu erkennen. Im Anschluss an die Reibschweißspitze 9 ist in dem gezeigten zylinderförmigen Ansatzstück eine Transportschnecke 6 eingearbeitet. Die Drehrichtung dieser Transportschnecke 6 ist so gewählt, dass der an der Rührreibspitze auftretende Materialauftrag 13 über die Steigung der Transportschnecke 6 nach oben und über die Öffnungen 8 in dem Werkzeughalter 14 später nach außen abtransportiert wird. Die Drehrichtung der Transportschnecke 6 kann jedoch auch entgegengesetzt gewählt werden um nach dem Schweißvorgang Reste des Materialauftrags 13 leichter entfernen zu können. Der Materialauftrag 13 ist hier als punktförmig dargestelltes Streugut gezeichnet, er besteht in der Praxis aus einem Endlosstrang und wird mechanisch entfernt. Auf diese Weise wird die Verschmutzung der behandelten Schweißstelle weitgehend unterbunden und die Standzeit der des Schweißwerkzeugs von etwa 2 Stunden auf bis zu 15 Stunden erhöht.
Zur Verstärkung dieses Effekts kann in einer besonderen Ausbauform der zusätzliche Einsatz von Ultraschallwellen und / oder Mitteln zum Absaugen erfolgen.

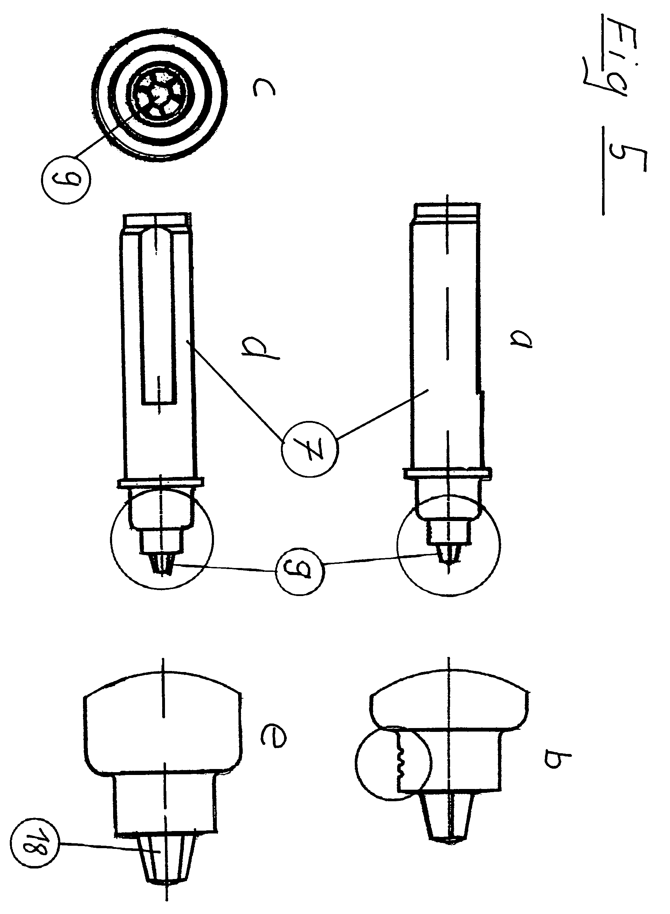

Die Fig. 5 zeigt nähere Detail - Ansichten des Arbeitswerkzeugs 7. Im Teil a dieser
Figur ist das Arbeitswerkzeug 7 mit der Reibschweißspitze 9 im Querschnitt dargestellt. Der hier gezeigte Detailkreis ist im Teil b der Fig. 5 vergrößert herausgezeichnet. In dieser Darstellung sind dann in dem ferner gezeigten Detailkreis an der Kante des Arbeitswerkzeugs 7 die Vertiefungen der Transportschnecke 6 zu erkennen.
Im Teil d der Fig. 5 ist das Arbeitswerkzeug 7 in gedrehter Stellung im Querschnitt gezeigt. Hierzu gehört die Teilansicht der Fig. 5 c, in der die Reibschweißspitze 9 von unten gezeigt ist, wobei in Verbindung mit der Darstellung in der Fig. 5 e die Ausgestaltung der Reibflächen 18 der Reibschweißspitze 9 gut zu erkennen sind. Die Reibschweißspitze 9 weist die Form eines Kegelstumpfes auf bei dem die Deckfläche in der Mitte erhöht ist. Hierbei wird die Mantelfläche des Kegelstumpfes durch sechs trapezförmige Flächenstücke gebildet, von denen drei Flächenstücke jeweils am Umfang gleichmäßig verteilt sich in einem Winkel von 120 Grad gegenüber liegen und einen größeren Anteil als 1/6 am Kreisumfang beanspruchen. Das heißt, es wechseln sich am Umfang des, die Reibschweißspitze 9 bildenden, Kegelstumpfes größere und kleinere trapezförmige Flächenstücke ab.

Die Fig. 6 zeigt die Darstellung eines komplexen Schweißvorgangs.
In dieser Fig. 6 wird am Beispiel eines speziellen Schweißguts mit einem zu verschweißenden Formteil in Schalenform bei dem die zu verschweißende Seite flach ausläuft, und einem darauf zu befestigenden Formblech, demonstriert, wie das erfindungsgemäße Verfahren bei Schweißvorgängen an gebogenen Formteilen angewendet werden kann.
Im linken Teil der Fig.6 ist eine Vorrichtung 22 zur Aufnahme eines schalenförmigen Schweißguts 20 mit Blick von der Seite dargestellt. Dieses Schweißgut 20 wird mittels eines linken Fixierbackens 15, eines rechten Fixierbackens 16 und eines mittleren Fixierbackens 17 in seiner Lage so fixiert, dass es mit einer Frontplatte 19 verschweißt werden kann. Die jeweiligen Doppelpfeile verdeutlichen die Verfahrwege der genannten Fixierelemente 15,16,17 beim Einspannen und Lösen des Schweißguts 20. Das Schweißgut 19 in Form einer Frontplatte 19 wird mittels einer oder, bei längeren Schweißnähten, mehrerer Fixierbacken 21 in seiner zu verschweißenden Lage fixiert.
Der in der Fig.6 gestrichelt gezeichnete Schnitt A-A ist auf der rechten Seite im Querschnitt zur Verdeutlichung herausgezeichnet. Hier ist zu erkennen, wie das Schweißgut in Form der Frontplatte 19 auf dem Rand des Schweißguts in Form der Schale 20 aufliegt und in dieser Lage mittels einer oder mehrerer Fixierbacken 21 fixiert wird. Zur Kontrolle des gewünschten Anpressdrucks der Fixierbacken 21 sind ein oder mehrere Sensoren 24 vorgesehen.
Zur Darstellung des erfindungsgemäßen Schweiß - Verfahrens ist im linken Teil der F0ig.6 an der rechten bogenförmig verlaufenden Schweißstelle ein Haltekegel 3 mit einem Spindellager 4 im Betrieb gezeigt.
Die Neigung der Längsachse des Spindellagers 4 gegenüber der Vertikalen (2,9 bis 3,2 Grad), die Neigung der Flächen 11 und der Anpressdruck der Gleitfläche 10 sind den speziellen Anforderungen der hier beschriebenen Schweißaufgabe angepasst.

Zur Überprüfung der Qualität der erzeugten Schweißnaht dient ein Überwachungssystem 23, das in der Form einer optischen Überwachung erfolgen kann. Auch die Überwachung der genauen Lage der zu verschweißenden Teile vor dem Schweißvorgang ist erfindungsgemäß vorgesehen.

Die komplexe Steuerung der beschriebenen Bewegungsabläufe erfordert ein spezielles Steuerprogramm.

### Bezugszeichenliste

- 1: Aufnahmeplatte (Roboterarm)
- 2: Antriebskopf
- 3: Haltekegel (Spindellager)
- 4: Spindellager
- 5: Schweißgut
- 6: Transportschnecke
- 7: Arbeitswerkzeug (Drehspindel)
- 8: Öffnungen für den Abtransport des Material - Auftrags
- 9: Reibschweißspitze
- 10: Gleitfläche
- 11: geneigte, gewölbte Gleitflächen
- 12: Transportschneckenlager (Drehspindel)
- 13: Materialauftrag
- 14: Werkzeughalter
- 15: linker Fixierbacken zur Schalenaufnahme
- 16: rechter Fixierbacken zur Schalenaufnahme
- 17: mittlerer Fixierbacken zur Schalenaufnahme
- 18: Reibflächen
- 19: Schweißgut Frontplatte
- 20: Schweißgut Schale
- 21: Fixierbacken zur Fixierung der Frontplatte
- 22: Vorrichtung zur Aufnahme der Schale
- 23: Qualitätsprüfungssystem
- 24: Sensor für die Kontrolle des Andrucks der Frontplatte

## Patentansprüche

1. Vorrichtung zur Verbesserung der Qualität der Schweißnaht beim Rührreibschweißen, umfassend die folgenden Merkmale:
a) einer Aufnahmeplatte (1) mit einem Antriebskopf (2) und einem Spindellager (4) zur Aufnahme einer Reibschweißspitze (9) **dadurch gekennzeichnet, dass** im Spindellager (4) eine spiralförmig ausgearbeitete Transportschnecke (6) die zum Abtransport von nicht benötigtem Material-Auftrag dient, in schräg nach außen führende Öffnungen (8) mündet, und weiter **gekennzeichnet durch** folgende Merkmale :
b) die Längssachse des Spindellagers (4) ist gegen die Vertikale in einem Winkel von 2,8 bis 3,2 Grad geneigt,
c) die Gleitfläche der Drehspindel besteht aus einer ebenen Gleitfläche (10) und besonders zur Verschweißung von kurvenförmigen Nähten aus jeweils einer, auf zwei gegenüber liegenden Seiten anschließenden, zur Gleitfläche (10) in einem spitzen Winkel geneigten, in sich gewölbten Gleitfläche (11), und
d) die Reibschweißspitze (9) weist die Form eines Kegelstumpfes auf, bei dem die Deckfläche in der Mitte erhöht ist, und wobei die Mantelfläche des Kegelstumpfes **durch** sechs trapezförmige Flächenstücke gebildet wird, von denen drei Flächenstücke jeweils am Umfang gleichmäßig verteilt sich in einem Winkel von 120 Grad gegenüber liegen und einen größeren Anteil als 1/6 am Kreisumfang beanspruchen.

2. Vorrichtung nach Anspruch 1, **dadurch gekennzeichnet, dass** die Neigung der Längsachse des Spindellagers (4), die Neigung der Flächen (11) und der Anpressdruck der Gleitfläche (10) so bemessen sind, dass sie zur Verschweißung eines dünnen, an den Seiten kurvenförmig berandeten, Bleches mit einem schalenförmig gestalteten, an den Rändern in gleicher Weise berandeten, Formkörpers optimiert sind.

3. Vorrichtung nach einem der vorhergehenden Ansprüche, **dadurch gekennzeichnet,**
**dass** der Anpressdruck der Gleitflächen (10, 11) einstellbar ist, und die jeweilige Einstellung gemessen und angezeigt wird.

4. Vorrichtung nach einem der vorhergehenden Ansprüche, **dadurch gekennzeichnet,**
**dass** zur Fixierung der zu verschweißenden Bauteile Mittel verwendet werden, deren Anpressdruck einstellbar ist und bei denen der Anpressdruck überwacht wird.

5. Vorrichtung nach einem der vorhergehenden Ansprüche, **dadurch gekennzeichnet,**
**dass** das Ergebnis des Schweißprozesses optisch überwacht wird.

6. Verfahren zur Verbesserung der Qualität der Schweißnaht beim Rührreibschweißen, **gekennzeichnet durch** die folgenden Merkmale:
a) der Vorgang des Rührreibschweißens erfolgt mit einer Reibschweißspitze (9) bei der im Spindellager (4) eine spiralförmig ausgearbeitete Transportschnecke (6) zum Abtransport von nicht benötigtem Material-Auftrag dient,
b) die Längssachse des Spindellagers (4) ist gegen die Vertikale in einem Winkel von 2,8 bis 3,2 Grad geneigt,
c) die Gleitfläche der Drehspindel besteht aus einer ebenen Gleitfläche (10) und zur Verschweißung von kurvenförmigen Nähten aus jeweils einer, auf zwei gegenüber liegenden Seiten anschließenden, zur Gleitfläche (10) in einem spitzen Winkel geneigten, in sich gewölbten, Gleitfläche (11), und
d) die Reibschweißspitze (9) wird in der Form eines Kegelstumpfes, auf bei dem die Deckfläche in der Mitte erhöht ist, gestaltet, wobei die Mantelfläche des Kegelstumpfes **durch** sechs trapezförmige Flächenstücke gebildet wird, von denen drei Flächenstücke jeweils am Umfang gleichmäßig verteilt, sich in einem Winkel von 120 Grad gegenüber liegen und einen größeren Anteil als 1/6 am Kreisumfang beanspruchen.

7. Verfahren nach Anspruch 6, **dadurch gekennzeichnet, dass** der Anpressdruck der Gleitflächen (10, 11) einstellbar ist, die jeweilige Einstellung gemessen und angezeigt wird, und der Schweißprozess somit geregelt wird.

8. Verfahren nach Anspruch 6 oder 7, **dadurch gekennzeichnet,**
**dass** das Ergebnis des Schweißprozesses optisch überwacht wird.

## Claims

1. Device for improving the quality of the weld seam in friction stir welding, comprising the following features:
a) a receiving plate (1) with a drive head (2) and a spindle bearing (4) for receiving a friction welding tip (9), **characterized in that** a transporting screw (6), which is machined in a spiral form in the spindle bearing (4), and serves for transporting away applied material that is not required, enters into openings (8) leading obliquely outward, and further **characterized by** the following features:
b) the longitudinal axis of the spindle bearing (4) is inclined with respect to the vertical at an angle of 2.8 to 3.2 degrees,
c) the sliding surface of the rotary spindle consists of a planar sliding surface (10) and, particularly for the welding of curved seams, of a respective sliding surface (11) which is itself curved, adjoins on two opposite sides and is inclined at an acute angle to the sliding surface (10), and
d) the friction welding tip (9) has the form of a truncated cone on which the top surface is raised in the middle, and wherein the lateral surface of the truncated cone is formed by six trapezoidal segments, of which three segments are respectively distributed uniformly on the circumference, lie at an angle of 120 degrees with respect to one another and account for a proportion greater than 1/6 of the circular circumference.

2. Device according to Claim 1,
**characterized**
**in that** the inclination of the longitudinal axis of the spindle bearing (4), the inclination of the surfaces (11) and the pressing pressure of the sliding surface (10) are dimensioned in such a way that they are optimized for the welding of a thin metal sheet with a curved border at the sides to a shaped body designed in the form of a dish and bordered in the same way at the edges.

3. Device according to one of the preceding claims,
**characterized**
**in that** the pressing pressure of the sliding surfaces (10, 11) can be set, and the respective setting is measured and displayed.

4. Device according to one of the preceding claims,
**characterized**
**in that** means by which the pressing pressure can be set and for which the pressing pressure is monitored are used for fixing the components to be welded.

5. Device according to one of the preceding claims,
**characterized**
**in that** the result of the welding process is monitored optically.

6. Method for improving the quality of the weld seam in friction stir welding, **characterized by** the following features:
a) the process of friction stir welding is effected by means of a friction welding tip (9), in which a transporting screw (6), which is machined in a spiral form in the spindle bearing (4), serves for transporting away applied material that is not required,
b) the longitudinal axis of the spindle bearing (4) is inclined with respect to the vertical at an angle of 2.8 to 3.2 degrees,
c) the sliding surface of the rotary spindle consists of a planar sliding surface (10) and, for the welding of curved seams, of a respective sliding surface (11) which is itself curved, adjoins on two opposite sides and is inclined at an acute angle to the sliding surface (10), and
d) the friction welding tip (9) is designed in the form of a truncated cone on which the top surface is raised in the middle, wherein the lateral surface of the truncated cone is formed by six trapezoidal segments, of which three segments are respectively distributed uniformly on the circumference, lie at an angle of 120 degrees with respect to one another and account for a proportion greater than 1/6 of the circular circumference.

7. Method according to Claim 6,
**characterized**
**in that** the pressing pressure of the sliding surfaces (10, 11) can be set, the respective setting is measured and displayed, and the welding process is consequently controlled.

8. Method according to Claim 6 or 7,
**characterized**
**in that** the result of the welding process is monitored optically.

## Revendications

1. Dispositif pour améliorer la qualité du cordon de soudure lors du soudage par friction-malaxage, comprenant les caractéristiques suivantes:
a) une plaque de réception (1) avec une tête d'entraînement (2) et un palier de broche (4) destiné à recevoir une pointe de soudage par friction (9),
**caractérisé en ce qu'**une vis sans fin de transport (6) usinée en spirale, qui sert pour l'évacuation de dépôt de matière non nécessaire, débouche dans le palier de broche (4) dans des ouvertures (8) menant en oblique vers l'extérieur, et caractérisé en plus par les caractéristiques suivantes:
b) l'axe longitudinal du palier de broche (4) est incliné d'un angle de 2,8 à 3,2 degrés par rapport à la verticale;
c) la face de glissement de la broche rotative se compose d'une face de glissement plane (10) et, en particulier pour le soudage de cordons incurvés, de chaque fois une face de glissement incurvée en soi (11) se raccordant sur deux côtés opposés et inclinée d'un angle aigu par rapport à la face de glissement (10), et
d) la pointe de soudage par friction (9) présente la forme d'un tronc de cône, dans lequel la face de recouvrement est accrue dans le milieu, et dans lequel la face latérale du tronc de cône est formée par six faces trapézoïdales, dont trois faces chaque fois réparties uniformément à la périphérie sont placées sous un angle de 120 degrés l'une par rapport à l'autre et occupent une plus grande partie que 1/6 du périmètre circulaire.

2. Dispositif selon la revendication 1, **caractérisé en ce que** l'inclinaison de l'axe longitudinal du palier de broche (4), l'inclinaison des faces (11) et la pression d'application de la face de glissement (10) sont dimensionnées de telle manière qu'elles soient optimisées pour le soudage d'une tôle mince, bordée sous forme courbe sur les côtés, avec un corps moulé réalisé en forme de coquille, bordé de manière identique sur les bords.

3. Dispositif selon l'une quelconque des revendications précédentes, **caractérisé en ce que** la pression d'application des faces de glissement (10, 11) est réglable, et le réglage respectif est mesuré et affiché.

4. Dispositif selon l'une quelconque des revendications précédentes, **caractérisé en ce que** l'on utilise, pour la fixation des composants à souder, des moyens dont la pression d'application est réglable et pour lesquels on surveille la pression d'application.

5. Dispositif selon l'une quelconque des revendications précédentes, **caractérisé en ce que** l'on surveille optiquement le résultat du processus de soudage.

6. Procédé pour améliorer la qualité du cordon de soudure lors du soudage par friction-malaxage, **caractérisé par** les caractéristiques suivantes:
a) on effectue l'opération de soudage par friction-malaxage avec une pointe de soudage par friction (9) dans laquelle une vis sans fin de transport (6) usinée en spirale sert dans le palier de broche (4) pour l'évacuation de dépôt de matière non nécessaire,
b) l'axe longitudinal du palier de broche (4) est incliné d'un angle de 2,8 à 3,2 degrés par rapport à la verticale,
c) la face de glissement de la broche rotative se compose d'une face de glissement plane (10) et, pour le soudage de cordons incurvés, de chaque fois une face de glissement incurvée en soi (11) se raccordant sur deux côtés opposés et inclinée d'un angle aigu par rapport à la face de glissement (10), et
d) la pointe de soudage par friction (9) est réalisée à la forme d'un tronc de cône, dans lequel la face de recouvrement est accrue dans le milieu, et dans lequel la face latérale du tronc de cône est formée par six faces trapézoïdales, dont trois faces chaque fois réparties uniformément à la périphérie sont placées sous un angle de 120 degrés l'une par rapport à l'autre et occupent une plus grande partie que 1/6 du périmètre circulaire.

7. Procédé selon la revendication 6, **caractérisé en ce que** la pression d'application des faces de glissement (10, 11) est réglable, on mesure et on affiche le réglage respectif et on règle de cette manière le processus de soudage.

8. Procédé selon la revendication 6 ou 7, **caractérisé en ce que** l'on surveille optiquement le résultat du processus de soudage.
